# EUROPÄISCHE PATENTSCHRIFT

(11) **EP 0 442 050 B1**
(45) Veröffentlichungstag und Bekanntmachung des Hinweises auf die Patenterteilung: **21.07.1993**
(21) Anmeldenummer: 90122158.0
(22) Anmeldetag: 20.11.1990
(51) Int. Cl.: B60T 8/00, B60T 13/66

(54) **Elektronisch geregelte Druckmittel-Bremseinrichtung**
Electronically controlled pressure means brake installation
Installation de freinage avec moyen de pression régulé électroniquement

(30) Priorität: 14.02.1990 DE 4004502
(43) Veröffentlichungstag der Anmeldung: 21.08.1991
(73) Patentinhaber: MERCEDES-BENZ AG, 70327 Stuttgart (DE)
(72) Erfinder: Klein, Bodo, W-7300 Esslingen (DE)

(56) Entgegenhaltungen:
- EP-A- 0 187 901
- EP-A- 0 345 203
- GB-A- 2 080 458

## Beschreibung

Die Erfindung betrifft eine elektronisch geregelte Druckmittel-Bremseinrichtung gemäß dem Oberbegriff des Patentanspruches 1.

Eine derartige gattungsgemäße Bremseinrichtung ist bekannt (EP 0 345 203 A2, insb. Fig. 1c), wobei diese Bremseinrichtung einerseits bereits ein hohes Maß an Bremssicherheit gewährleistet, unabhängig von eventuellen Störungen in der Elektrik/Elektronik oder Komponenten oder Steuerleitungen derselben, und andererseits in Bremsanlagen sowohl ohne als auch mit Antiblockierregelung einsetzbar ist.

Aufgabe der Erfindung ist es, eine gattungsgemäße Bremseinrichtung so weiterzubilden, daß sie zum einen ebenfalls ein Höchstmaß an Bremssicherheit gewährleistet, zum anderen aber auch noch in Bremsanlagen mit verschleißloser Bremse einsetzbar ist.

Diese Aufgabe wird erfindungsgemäß mit den kennzeichnenden Merkmalen des Anspruches 1 gelöst, wobei diese Lösung gegenüber der Lehre nach der gattungsbildenden Bremseinrichtung einen weiteren, anderen Weg zur Erzielung eines Höchstmaßes an Bremssicherheit bei noch universellerem Einsatz darstellt.

Vorteilhafte Aus- und Weiterbildungen des Erfindungsgegenstandes sind hierbei durch die Merkmale der Unteransprüche gekennzeichnet; ersichtlich kann der Erfindungsgegenstand sowohl bei Bremseinrichtungen mit zusätzlicher Antiblockierregelungsfunktion (ABS) als auch bei Fahrzeugen mit zusätzlicher verschleißloser Bremse (Retarder- oder Motorbremse) angewandt werden.

Weitere Einzelheiten der Erfindung sind einem nachfolgend beschriebenen Ausführungsbeispiel zu entnehmen.

In der Zeichnung zeigen:
- Figur 1: ein schematisches Schaltbild der Erfindung für einen Radbremszylinder und
- Figur 2: ein schematisches Schaltbild für eine komplette Fahrzeug-Bremsanlage.

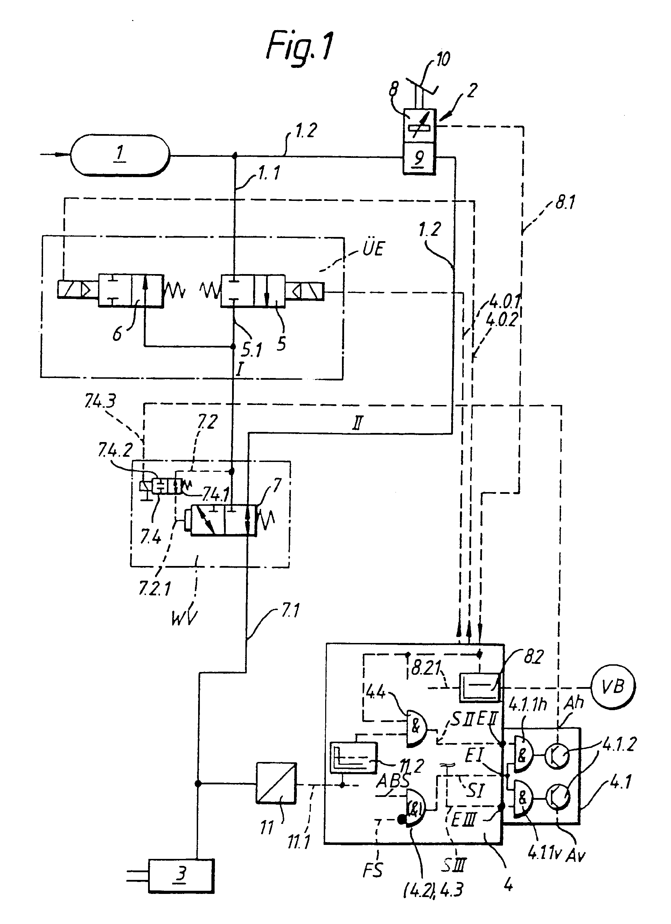

Figur 1 zeigt ein schematisches Schaltbild einer elektronisch geregelten Druckmittel-Bremseinrichtung für ein Kraftfahrzeug, welche mit Druckluft als Druckmittel arbeitet und der Anschaulichkeit wegen lediglich aus einem Bremskreis mit einem Radbremszylinder besteht.

Als Druckmittelquelle ist ein Druckluft-Vorratsbehälter 1 vorgesehen, der auf nicht dargestellte Weise mit Druckluft versorgt wird. Von diesem Vorratsbehälter 1 führt eine Druckleitung 1.1 zu einem als Einlaßventil 5 wirkenden Elektromagnetventil einer Elektromagnetventileinheit ÜE, welches von einer elektronischen Regeleinrichtung 4 über die Steuerleitung 4.0.1 angesteuert wird. Sämtliche Steuerleitungen in Fig. 1 sind strichliert dargestellt. Vom Einlaßventil 5 führt eine Druckleitung 5.1 zu einem 3/2-Wegeventil 7 und zu einem als Auslaßventil 6 wirkenden weiteren Elektromagnetventil der Elektromagnetventileinheit ÜE, welches ebenfalls von der elektronischen Regeleinrichtung 4 über die Steuerleitung 4.0.2 angesteuert wird. Vom 3/2-Wegeventil 7 führt eine weitere Druckleitung 7.1 zu dem Radbremszylinder 3 des zu bremsenden Rades. Die vorstehend beschriebene Druckluftführung vom Vorratsbehälter 1 über das Einlaßventil 5 zum 3/2-Wegeventil 7 wird als Hauptbremskreis I bezeichnet.

Vom Vorratsbehälter 1 führt eine weitere Druckleitung 1.2 zu einem Betriebsbremsventil 9 eines Bremswertgebers 2 und von diesem zu einem weiteren Anschluß des 3/2-Wegeventils 7. Diese Druckluftführung wird als redundanter Nebenbremskreis II bezeichnet.

Der Bremswertgeber 2 weist neben dem bereits genannten Betriebsbremsventil 9 einen Sollwertgeber 8 auf. Beide Einheiten werden von einem Bremspedal 10 betätigt, wobei ein der Pedalbetätigung proportionaler Sollwert als elektrisches Signal über die Steuerleitung 8.1 der elektronischen Regeleinrichtung 4 zugeführt wird, ebenso wie ein dem Druck im Radbremszylinder 3 proportionales Signal über die Leitung 11.1, welches über einen diesen Druck aufnehmenden und in ein elektrisches Signal wandelnden Drucksensor 11 gewonnen wird.

Die Elektromagnetventile 5 und 6 sowie das 3/2-Wegeventil sind in ihrer Ruhestellung dargestellt, welche sie einnehmen, wenn an den Ventilen 5 und 6 kein Steuersignal über die Steuerleitungen 4.0.1, 4.0.2 anliegt bzw. am 3/2-Wegeventil 7 kein Druck über die pneumatische Vorsteuerleitung 7.2.1 ansteht.

Das Einlaßventil 5 ist also in Ruhestellung gesperrt, das Auslaßventil 6 geöffnet und das Wegeventil 7 so geschaltet, daß es den Radbremszylinder 3 mit dem Nebenbremskreis II verbindet.

Diese Ventilstellungen liegen vor, wenn das Bremspedal 10 nicht betätigt ist.

Das 3/2-Wegeventil ist so ausgebildet, daß es in Arbeitsstellung geht, sobald in der vom Hauptbremskreis I abgezweigten Vorsteuerleitung 7.2, 7.2.1 ein Druck von z.B. mindestens 0,2 bis 0,3 bar anliegt. Dies ist etwa der Wert, der bei einer geregelten Bremsung auf Glatteis dem Radbremszylinder noch zugeführt werden kann.

Ersichtlich ist in die Vorsteuerleitung 7.2 zum 3/2-Wegeventil 7 noch ein 2/2-Magnetventil 7.4 geschaltet, über dessen Durchflußventil 7.4.1 (entsprechend der gezeigten Ruhestellung) ungehindert Bremsmitteldruck von der Vorsteuerleitung 7.2 über die Vorsteuerleitung 7.2.1 an das Wegeventil 7 gelangen und dieses in seine die Druckleitung 5.1 mit der Druckleitung 7.1 verbindende Arbeitsstellung schalten kann. Das 2/2-Magnetventil 7.4 ist über eine elektrische Steuerleitung 7.4.3 mit einem Logikbaustein 4.1 verbunden und wird von diesem bei Vorliegen entsprechender Bedingungen aktiviert und in seine Arbeitsstellung geschaltet, in welcher dann sein Sperrventil 7.4.2 die Vorsteuerleitung 7.2 von der Vorsteuerleitung 7.2.1 abtrennt, letztere also sperrt.

Bei Betätigung des Bremspedals 10 wird vom Sollwertgeber 8 ein Sollwert an die elektronische Regeleinrichtung 4 gemeldet. Diese sendet Steuersignale aus, durch welche das Auslaßventil 6 geschlossen und das Einlaßventil 5 geöffnet wird, wodurch Druckluft vom Vorratsbehälter 1 zum 3/2-Wegeventil 7 gelangt. Sobald der sich vor dem Wegeventil aufbauende Druck den vorgegebenen Wert von z.B. 0,2 bis 0,3 bar überschreitet, geht das 3/2-Wegeventil 7 in Arbeitsstellung, wodurch der Radbremszylinder 3 mit Druckluft aus dem Hauptbremskreis I beaufschlagt wird und die Bremswirkung einsetzt. Erreicht der vom Drucksensor 11 sensierte Druck-Istwert den Sollwert, wird das Einlaßventil 5 geschlossen und der Druck damit gehalten, sofern das Bremspedal mittlerweile keinen anderen Sollwert vorgibt. Mit dem Einlaß- und dem Auslaßventil kann der Druck im Radbremszylinder 3 in an sich bekannter Weise beliebig aufgebaut, gehalten und wieder abgesenkt werden. Die Steuersignale dazu werden in an sich bekannter Weise in der elektronischen Regeleinrichtung - beispielsweise einer ABS- und/oder ALB- und/oder ASR-Regeleinrichtung - erzeugt, was hier nicht dargestellt ist.

Infolge der Ausbildung der Elektromagnetventile als Membranventile ist nicht damit zu rechnen, daß diese in ihrer Arbeitsstellung blockieren. Es ist demnach lediglich zu beachten, daß sie bei möglichen Defekten der elektronischen Regeleinrichtung (falsche Steuerbefehle) oder der Steuerleitungen (Leitungsbruch) in ihrer Arbeits- oder Ruhestellung verharren. Wenn das Einlaßventil 5 nicht öffnet, sobald das Bremspedal 10 betätigt wird, bleibt auch das 3/2-Wegeventil 7 in seiner Ruhestellung und es kann normal über das Betriebsbremsventil 9 und den redundanten Nebenbremskreis II gebremst werden. Dies ist auch dann der Fall, wenn das Auslaßventil 6 nicht schließt, da dann im Hauptbremskreis I kein Druck entsteht und das 3/2-Wegeventil 7 ebenfalls in Ruhestellung verbleibt. Der Druckverlauf infolge Ventilansteuerung wird von der elektronischen Regeleinrichtung über den Drucksensor 11 überwacht. Im Falle eines Defekts wird von der die Gesamtbremseinrichtung elektrisch/elektronisch überprüfenden Regeleinrichtung 4 im Rahmen von durchgeführten Prüfroutinen der Fehler erkannt und ein Fehlerstatussignal FS generiert, welches die elektronische Regeleinrichtung bezüglich des Steuerteiles abschaltet, was dem Fahrer über ein diesbezügliches Anzeigesignal signalisiert wird. Ein derartiges Prüfverfahren ist bekannt (DE 38 29 949 A1, wobei dort ein eventuelles Fehlerstatussignal auf der Ausgangsleitung 97, Fig.3, ansteht).

Die Betriebsbremse (Bremspedal 10, Betriebsbremsventil 9, Nebenbremskreis II, 3/2-Wegeventil 7, Radbremszylinder 3) bleibt jedoch voll funktionsfähig.

Wie bereits erwähnt, ist in die Vorsteuerleitungen 7.2 und 7.2.1 noch das 2/2-Magnetventil 7.4 geschaltet, welches in bestromtem Zustand - also in seiner Arbeitsstellung - die Vorsteuerleitungen 7.2 und 7.2.1 sperrt. Hierbei wird einerseits verhindert, daß Bremsmitteldruck von der Elektromagnetventileinheit ÜE über die Druckleitung 5.1 und die Vorsteuerleitungen 7.2, 7.2.1 auf den Steuerteil des 3/2-Wegeventils 7 wirken kann und andererseits wird bei vorgesteuertem 3/2-Wegeventil 7 der Steuerdruck in der Vorsteuerleitung 7.2.1 zwischen dem 3/2-Wegeventil 7 und dem 2/2-Magnetventil 7.4 gehalten.

Zur Ansteuerung des 2/2-Magnetventils 7.4 ist dieses über die elektrische Steuerleitung 7.4.3 mit einem Ausgang A eines einfachen und robusten, von der elektronischen Regeleinrichtung vorzugsweise getrennten Logikbaustein 4.1 verbunden. Dieser besitzt für jeden Bremskreis (beispielsweise für den Vorderachs- und den Hinterachsbremskreis) eine UND-Verknüpfung 4.1.1v und 4.1.1h und je eine von dieser ansteuerbare Endstufe 4.1.2 mit einem entsprechenden Ausgang (Av bzw. Ah). Die UND-Verknüpfung 4.1.1h steuert hierbei die zugehörige Endstufe durch, wenn an den Eingängen E I und E II Signale S I und S II anliegen, hingegen steuert die UND-Verknüpfung 4.1.1v die zugehörige Endstufe durch, wenn an den Eingängen E I und E III Signale S I und S III anliegen.

Das Signal S II charakterisiert hierbei eine Verknüpfung der Bedingungen
- der Bremsmitteldruck in der Vorsteuerleitung 7.1 zum Radbremszylinder 3 der Hinterachse und vom Drucksensor 11 sensiert, hat eine definierte Druckschwelle - in einem Komparator 11.2 auf beispielsweise 0,5bar eingestellt - (von oben her) unterschritten und
- das generelle Vorliegen einer Sollwertvorgabe über die Steuerleitung 8.1 vom Sollwertgeber 8 des Bremswertgebers 2.

Gleichermaßen charakterisiert das Signal S III eine Verknüpfung der Bedingungen bezogen auf den Vorderachsbremskreis.

Hingegen charakterisiert das Signal I am Eingang E I mindestens das Nichtvorliegen eines Fehlerstatussignals FS in der die Gesamtbremseinrichtung elektrisch/elektronisch überprüfenden Regeleinrichtung 4, wobei das Signal I das Ausgangssignal eines Inverters 4.2 darstellt, welchem das Fehlerstatussignal FS zugeführt wird. Ist jedoch die Bremsanlage mit einer Antiblockierregelung ausgerüstet, dann ist das Signal I das Ausgangssignal eines UND-Gliedes 4.3, dessen einem Eingang das bei aktiver Antiblockierregelung auftretende Antiblockierregelungssignal ABS und dessen anderem, invertierenden Eingang das Fehlerstatussignal FS zugeführt wird.

Die Funktionsweise bei einer Bremsanlage mit Antiblockiersystem, jedoch ohne Integration einer verschleißlosen Bremse (Retarder- oder Motorbremse) in die Betriebsbremse ist nun folgende:

Findet im Rahmen einer Bremsung des Fahrzeuges, bei welcher wie eingangs beschrieben das 3/2-Wegeventil 7 aufgrund des Vorsteuerdrucks von 0,2 - 0,3 bar in seine Arbeitsstellung geschaltet wird und somit den Nebenbremskreis II sperrt, eine Antiblockierregelung statt, um das gebremste Rad vor dem Blockieren zu schützen, so kann im Rahmen der ABS-Regelung auf Grund der von der elektronischen Regeleinrichtung 4 angesteuerten Elektromagnetventileinheit ÜE der Bremsmitteldruck in den Druckleitungen 5.1 und 7.1 für eine sehr kurze Zeitspanne unter den für das Schalten des 3/2-Wegeventils 7 erforderlichen Vorsteuerdruck von 0,2 - 0,3 bar absinken, was ein Schalten des 3/2-Wegeventils 7 in seine Ruhestellung und ein Wirksamwerden des Nebenbremskreises II zur Folge hätte. Um dies jedoch zu verhindern, wird der in der Druckleitung 7.1 vom Drucksensor 11 gemessene Druckwert dem Komparator 11.2 zugeführt, welcher ein Ausgangssignal erzeugt, wenn der Bremsmitteldruck die definierte Druckschwelle von 0,5 bar in der Druckleitung 7.1 unterschreitet. Dieses Ausgangssignal wird mit dem Signal der generellen Sollwertvorgabe vom Sollwertgeber 8 - welches über die Steuerleitung 8.1 ansteht, da gebremst wird - in einem UND-Glied 4.4 verknüpft und das Ausgangssignal S II generiert. Da weiterhin am UND-Glied 4.3 zum einen das Antiblockierregelungssignal ABS und zum anderen kein Fehlerstatussignal FS anliegt, wird von diesem das Ausgangssignal S I generiert. Da nunmehr beide Eingänge E I und E II des UND-Gliedes 4.1.1h des Logikbausteines 4.1 auf logisch "1" sind, steuert das UND-Glied 4.1.1h die Endstufe 4.1.2 durch, worauf das 2/2-Magnetventil 7.4 über den Ausgang Ah und die Steuerleitung 7.4.3 aktiviert wird und in seine Arbeitsstellung schaltet, in welcher es die Vorsteuerleitung 7.2.1 sperrt und somit der in dieser anstehende Vorsteuerdruck gehalten wird, so daß das 3/2-Wegeventil in seiner Arbeitsstellung verbleibt. Ersichtlich ist hierbei wesentlich, daß die definierte Druckschwelle (0,5bar) für das Schalten des 2/2-Wegemagnetventils 7.4 größer ist als der erforderliche Vorsteuerdruck (0,2-0,3bar) für das Schalten des 3/2-Wegeventils 7.
Entfällt nun wieder mindestens eine der auf die UND-Glieder 4.3 und 4.4 geführten Bedingungen, so kehrt das 2/2-Wegemagnetventil 7.4 wieder in seine Ruhestellung zurück, während das 3/2-Wegeventil 7 während des weiteren Bremsvorganges in seiner Arbeitsstellung verbleibt. Aus dieser kehrt es nur dann in seine Ruhestellung zurück, wenn entweder der Bremsvorgang beendet ist oder ein Fehlerstatussignal FS auftritt, welches wie eingangs ausgeführt die elektronische Regeleinrichtung 4 bezüglich einer Ansteuerung der Elektromagnetventileinheit ÜE abschaltet, so daß auf jeden Fall der redundante Nebenbremskreis II wirksam wird.

Die Funktionsweise bei einer Bremsanlage mit in die Betriebsbremse integrierter verschleißloser Bremse (Retarder- oder Motorbremse) ist hingegen folgende:

Sinnvollerweise ist bei der Fahrzeugbremsung erst die Bremsleistung der verschleißlosen Bremse einzusetzen und erst bei höheren, über einem Schwellwert liegenden Sollwertvorgaben des Sollwertgebers 8 die Betriebsbremsleistung hinzuzufügen. Da bei der Bremseinrichtung gemäß dem Ausführungsbeispiel bzw. generell bei derartigen Bremsanlagen aber mit dem Betätigen des Bremspedals 10 nicht nur der Sollwertgeber 8, sondern auch das Betriebsbremsventil 9 für den Nebenbremskreis II betätigt wird, würde dieser schon bei Sollwertvorgaben unterhalb des Schwellwertes wirksam werden. Um dies zu verhindern, wird die Sollwertvorgabe des Sollwertgebers 8 des weiteren noch einem Schwellwertglied 8.2 der elektronischen Regeleinrichtung 4 zugeführt. Liegt die Sollwertvorgabe unterhalb des eingestellten Schwellwertes, wird durch ein Ausgangssignal 8.2.1 des Schwellwertgliedes 8.2 über die elektronische Regeleinrichtung 4 sowohl die verschleißlose Bremse VB aktiviert als auch kurzzeitig über die Steuerleitungen 4.0.1, 4.0.2 das Ein- und Auslaßventil 5,6 der Elektromagnetventileinheit ÜE angesteuert. Der innerhalb der sehr kurzen Zeitspanne während der Ansteuerung erfolgende Druckstoß im Hauptbremskreis I bewirkt über die Vorsteuerleitungen 7.2 und 7.2.1 ein Schalten des 3/2-Wegeventils 7 in seine Arbeitsstellung, wodurch es den Nebenbremskreis II sperrt. Gleichzeitig gelangt der Druckstoß aber auch in die Druckleitung 7.1, so daß sich in dieser ein Bremsdruck größer der definierten Druckschwelle von 0,5 bar aufbaut. Entfällt nach der sehr kurzen Zeitspanne die Ansteuerung der Elektromagnetventileinheit ÜE wieder, so geht das Einlaßventil 5 in seine (sperrende) Ruhestellung und das Auslaßventil 6 in seine (entlüftende) Ruhestellung. Hierbei kann sich der in der Druckleitung 7.1 anstehende Druck über das sich in Arbeitsstellung befindende 3/2-Wegeventil 7, die Druckleitung 5.1 und das Auslaßventil 6 abbauen, wobei aber der Drucksensor 11 und der Komparator 11.2 das Unterschreiten der definierten Druckschwelle von 0,5 bar feststellen, woraufhin der eine Eingang des UND-Gliedes 4.4 auf logisch "1" gesetzt wird. Da aber auch der andere Eingang des UND-Gliedes 4.4 infolge einer generellen Sollwertvorgabe des Sollwertgebers 8 aufgrund der Bremsbetätigung über die Steuerleitung 8.1 auf logisch "1" liegt, steht auch am Eingang E II des Logikbausteins 4.1 das Signal II an. Ferner liegt auch am Eingang E I das Signal I an, wenn am Inverter 4.2 kein Fehlerstatussignal FS anliegt. In Folge steuert das UND-Glied 4.1.1 h die Endstufe 4.1.2 durch und über den Ausgang Ah wird das 2/2-Wegemagnetventil 7.4 angesteuert, so daß dieses in seine Arbeitsstellung schaltet, in welcher es die Vorsteuerleitung 7.2.1 absperrt, wodurch der in dieser noch anstehende Vorsteuerdruck das 3/2-Wegeventil 7 weiterhin für die Zeit der Bremsbetätigung in seiner Arbeitsstellung hält; der Bremsdruck in der Druckleitung 7.1 infolge des Druckstoßes kann sich dadurch vollständig über das Auslaßventil 6 abbauen. Gleichwohl ist aber gewährleistet, daß der redundante Nebenbremskreis II nicht wirksam ist, sondern ausschließlich die verschleißlose Bremse VB.

Erst mit Beendigung des Bremsvorganges (Wegfall der Sollwertvorgabe am Eingang des UND-Gliedes 4.4 und somit Wegfall des Signals S II) oder bei Auftreten eines Fehlerstatussignals FS am Inverter 4.2 (und somit Wegfall des Signals S I) schaltet das 2/2-Wegemagnetventil 7.4 wieder in seine Ruhestellung und in Folge auch das 3/2-Wegeventil 7, wobei im Falle des Vorliegens eines Fehlerstatussignals FS der redundante Nebenbremskreis II voll wirksam ist.

Wird jedoch im Rahmen der Abbremsung des Fahrzeuges die Sollwertvorgabe über den eingestellten Schwellwert des Schwellwertgliedes 8.2 angehoben, muß also zu der verschleißlosen Bremse VB auch noch die Betriebsbremse hinzugezogen werden, so wird von der elektronischen Regeleinrichtung 4 wie eingangs ausgeführt, die Elektromagnetventileinheit ÜE angesteuert, worauf Bremsdruck über den Hauptbremskreis I (5.1, das sich bereits in Arbeitsstellung befindende 3/2-Wegeventil 7, 7.1) in den Radbremszylinder 3 eingesteuert wird. Da sich hierbei in der Druckleitung 7.1 ein Bremsdruck größer der definierten Druckschwelle von o,5 bar aufbaut, wird über den Drucksensor 11 und den Komparator 11.2 der Eingang des UND-Gliedes 4.4 auf logisch "0" gesetzt, so daß das Signal S II entfällt und in Folge das 2/2-Wegemagnetventil 7.4 in seine Ruhestellung schaltet. Das 3/2-Wegeventil 7 verbleibt jedoch in seiner Arbeitsstellung, da es über die Vorsteuerleitungen 7.2,7.2.1 weiterhin vorgesteuert ist.

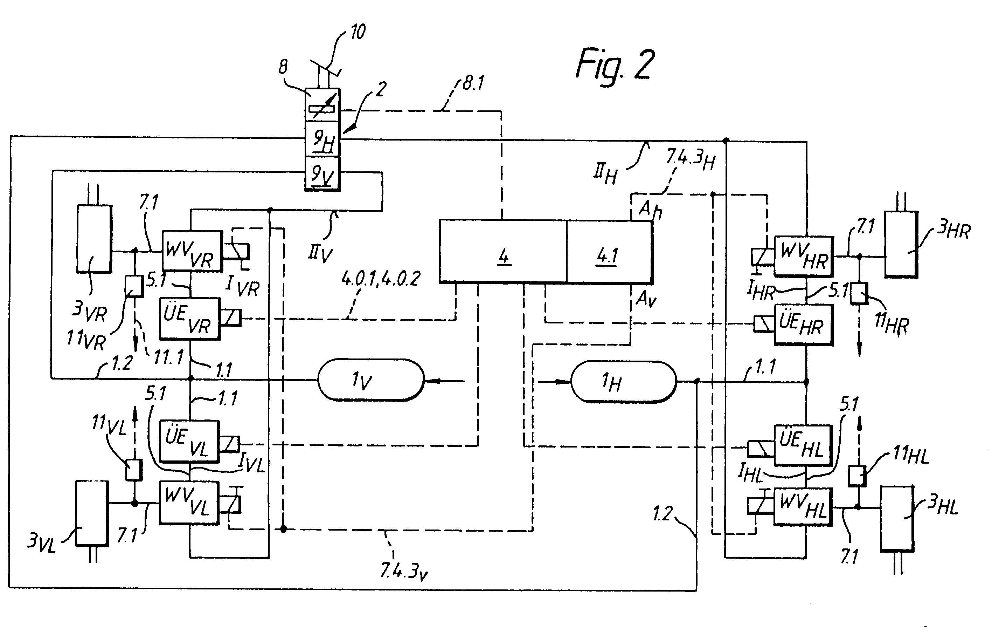

In Figur 2 ist schematisch ein Bremssystem nach Figur 1 für ein Nutzfahrzeug mit zwei Achsen und zwei Bremskreisen dargestellt. Zusätzlich zu den aus Figur 1 übernommenen Bezugszahlen sind diese mit Indices versehen, welche folgende Bedeutung haben:
- V :: vorne bzw. Vorderachse oder Vorderrad,
- H :: hinten bzw. Hinterachse oder Hinterrad,
- L :: links, und
- R :: rechts.

Die beiden vorhandenen Bremskreise sind achsenweise aufgeteilt, d.h., ein Bremskreis ist für die Vorderräder und der andere für die Hinterräder vorgesehen.

Gemeinsam für beide Bremskreise ist die elektronische Regeleinrichtung 4, der Logikbaustein 4.1 und der Bremswertgeber 2 mit Sollwertgeber 8 und Bremspedal 10. Für jeden Bremskreis ist der Bremswertgeber mit einem eigenen Betriebsbremsventil - 9ᵥ für den Vorderachsbremskreis und 9_{H} für den Hinterachsbremskreis - ausgerüstet. Der Einfachheit halber und um das schematische Schaltbild übersichtlicher zu machen, sind die beiden Elektromagnetventile 5 und 6, in Figur 1 strichpunktiert umrandet, zu einer gemeinsamen Übertragungseinheit ÜE und das 3/2-Wegeventil 7 und das 2/2-Magnetventil 7.4 zu einer Wegeventileinheit WV - entsprechend der Einzelheit WV in Figur 1 - zusammengefaßt und den jeweiligen Indices für vorne, hinten, links und rechts dargestellt.

Betrachtet man nun beispielsweise den Vorderachsbremskreis, so ist in diesem Ausführungsbeispiel jedem Rad der Vorderachse eine Übertragungseinheit ÜE, eine Wegeventileinheit WV, ein Radbremszylinder 3 und ein Drucksensor 11 zugeordnet. Für das linke Vorderrad also die Bezugszeichen ÜE_{VL}, WV_{VL}, 3_{VL} und 11_{VL}. Desgleichen für das rechte Vorderrad ÜE_{VR}, WV_{VR}, 3_{VR} und 11_{VR}. Von einem dem Vorderachsbremskreis zugeordneten Druckluft-Vorratsbehälter l_{V} gehen Druckluftleitungen 1.1, 1.2 zu den Übertragungseinheiten ÜE_{VL} und ÜE_{VR} sowie zum Betriebsbremsventil 9_{V} des Bremswertgebers 2. Jede der beiden Übertragungseinheiten ist über die zugeordnete Wegeventileinheit mit dem entsprechenden Radbremszylinder und dem diesem zugeordneten Drucksensor verbunden, also ÜE_{VL} - WV_{VL} - 3 _{VL} - ll_{VL} und ÜE_{VR} - WV_{VR} - 3_{VR} - ll_{VR}. Diese Leitungsführung entspricht den Hauptbremskreisen I_{VL} und I_{VR}. Das Betriebsbremsventil 9_{V} ist über Druckluftleitungen 1.2 mit den Wegeventileinheiten WV_{VL} und WV_{VR} verbunden, in deren Ruhestellungen der über das Betriebsbremsventil 9_{V} aufgebaute Druck in die Radbremszylinder 3_{VL} und 3_{VR} gelangen kann. Diese Leitungsführung entspricht dem für beide Räder dieses Bremskreises gemeinsamen Nebenbremskreis II_{V}.
Ferner sind die Wegeventileinheiten (in diesen das 2/2-Wegemagnetventil 7.4) über die elektrische Steuerleitung 7.4.3_{V} und den Ausgang A_{V} mit dem Logikbaustein 4.1 verbunden.

Der vorstehend für den Vorderachsbremskreis beschriebene Schaltungsaufbau ist identisch mit dem für den Hinterachsbremskreis, so daß sich eine Beschreibung desselben erübrigt.

Erfolgt nun bei Betätigung des Bremspedals ein von der elektronischen Regeleinrichtung ausgehendes Steuersignal für eine der Übertragungseinheiten, so kann jedes angesprochene Rad nach einer der bekannten Brems-"Philosophien" allein oder gemeinsam mit anderen Rädern abgebremst werden, wie unter Fig. 1 beschrieben. Bei eventuellen Störungen in der elektronischen Regeleinrichtung oder Komponenten oder Steuerleitungen derselben und nach deren Abschaltung durch das Fehlerstatussignal sind die Hauptbremskreise aller zu bremsenden Räder außer Betrieb und es kann achsenweise über die Nebenbremskreise II_{V} und II_{H} gebremst werden, die bei dieser Bremseinrichtung als redundante Bremskreise dienen.

Durch Anordnung der Druckluftvorratsbehälter und der Ventile nahe bei den zugeordneten Radbremszylindern ist ein schnelles Ansprechen der Bremsen gewährleistet.
Lediglich bei Betätigung der Betriebsbremse nach Ausfall der Elektronik kann infolge der über das Fahrerhaus geführten langen Druckluftleitungen eine Verzögerung beim Aufbau der Bremskräfte über den Nebenbremskreis, wie bisher, erfolgen.

## Patentansprüche

1. Elektronisch geregelte Druckmittel-Bremseinrichtung für wenigstens einen Bremskreis eines Fahrzeuges,
mit mindestens einem Betriebsbremsventil (9)
und einem elektrischen Sollwertgeber (8),
die gemeinsam über ein Bremspedal (10) betätigbar sind, und mit einem Radbremszylinder (3) für jedes in diesem Bremskreis zu bremsende Rad, der/die
mittels einer von einer elektronischen Regeleinrichtung (4) steuerbaren Elektromagnetventileinheit (ÜE 5,6) über einen Hauptbremskreis (I) direkt
oder über einen Nebenbremskreis (II) und das Betriebsbremsventil (9)
mit einer Druckmittelquelle (1) verbindbar ist/sind, wobei am Eingang zum Radbremszylinder (3) ein über eine Vorsteuerleitung (7.2,7.2.1) vom Bremsmitteldruck im Hauptbremskreis (I) vorsteuerbares 3/2-Wegeventil (7),
welches in seiner Ruhestellung die Verbindung mit dem Nebenbremskreis (II) und in seiner vom Bremsmitteldruck vorgesteuerten Arbeitsstellung die Verbindung mit dem Hauptbremskreis (I) herstellt,
und ein den Druckverlauf überwachender Drucksensor (11) angeordnet sind,
und wobei ferner in die von einer Druckleitung (5.1) im Hauptbremskreis (I) abgezweigte und zum 3/2-Wegeventil (7) führende Vorsteuerleitung (7.2) ein über eine elektrische Steuerleitung (7.4.3) ansteuerbares 2/2-Wegemagnetventil (7.4) geschaltet ist,
welches in seiner Ruhestellung auf Durchgang geschaltet ist und im Hauptbremskreis (I) anstehenden Bremsmitteldruck ungehindert an das 3/2-Wegeventil (7) zu dessen Vorsteuerung gelangen läßt,
**dadurch gekennzeichnet**,
daß das 2/2-Wegemagnetventil (7.4) in seiner angesteuerten Arbeitsstellung die Vorsteuerleitung (7.2, 7.2.1) sperrt,
daß die elektrische Steuerleitung (7.4.3) mit einem Logikbaustein (4.1) verbunden ist,
welcher für jeden Bremskreis zwei, jeweils auf eine UND-Verknüpfung (4.1.1 h, 4.1.1 v) geführte Eingänge (E I, E II; E I, E III)
und einen Ausgang (Ah; Av) einer mit der UND-Verknüpfung verbundenen und von dieser ansteuerbaren Endstufe (4.1.2) aufweist,
daß das 2/2-Wegemagnetventil (7.4) über den Ausgang und die elektrische Steuerleitung (7.4.3) dann angesteuert wird,
wenn an einem Eingang (EII ; EIII) zum Logikbaustein (4.1) ein Signal (S II; S III) anliegt,
welches ein Unterschreiten einer definierten Druckschwelle (11.2) des durch den Drucksensor (11) überwachten Bremsmitteldruckes am Radbremszylinder (3) und das generelle Vorliegen einer Sollwertvorgabe vom Sollwertgeber (8) charakterisiert,
und an einem anderen Eingang (EI) zum Logikbaustein (4.1) ein Signal ( S I) anliegt,
welches mindestens das Nichtvorliegen eines Fehlerstatussignals (FS) seitens der die Gesamtbremseinrichtung elektrisch/elektronisch überprüfenden Regeleinrichtung (4) charakterisiert.

2. Elektronisch geregelte Druckmittel-Bremseinrichtung nach Anspruch 1,
**dadurch gekennzeichnet**,
daß die Sollwertvorgabe des Sollwertgebers (8) des weiteren einem Schwellwertglied (8.2) zugeführt wird, welches bei einer Sollwertvorgabe unterhalb eines eingestellten Schwellwertes über die elektronische Regeleinrichtung (4) kurzzeitig die Elektromagnetventileinheit (ÜE 5,6) ansteuert (8.2.1), so daß das 3/2-Wegeventil (7) in seine Arbeitsstellung schaltet.

3. Elektronisch geregelte Druckmittel-Bremseinrichtung nach Anspruch 1,
**dadurch gekennzeichnet,**
daß das Signal ( S I) zusätzlich das Vorliegen eines Antiblockierregelungssignals (ABS) charakterisiert.

4. Elektronisch geregelte Druckmittel-Bremseinrichtung nach Anspruch 1,
**dadurch gekennzeichnet,**
daß die definierte Druckschwelle für das Schalten des 2/2-Wegemagnetventils (7.4) größer ist als der erforderliche Vorsteuerdruck für das Schalten des 3/2-Wegeventils (7).

## Claims

1. Electronically controlled pressure-medium brake device for at least a brake circuit of a vehicle, with at least one service brake valve (9) and an electrical setting means (8), which can be operated together by means of a brake pedal (10), and having a wheel brake cylinder (3) for each of the wheels to be braked in this brake circuit, which can be directly connected with a pressure-medium reservoir (1) by means of a solenoid-operated pilot valve unit (ÜE 5,6) controlled by an electronic adjustment device (4) by means of a master brake circuit (I) or via a secondary brake circuit (II) and the service brake valve (9), whereby a 3/2-road valve (7) which can be pilotted by brake medium pressure in the master brake circuit (I) by means of a pilot circuit (7. 2, 7. 2. 1) and which produces the connection with the secondary brake circuit (II) in its idle position and produces the connection with the master brake circuit (I) in its working position which is pilotted by the brake-medium pressure, and a pressure sensor ( 11 ) which monitors the pressure process, are disposed at the entrance to the wheel brake cylinder (3), and whereby furthermore a 2/2-road solenoid valve (7.4) which is controlled by an electrical control circuit (7.4.3) is switched in the pilot cicuit (7. 2) which branches from a pressure pipe (5. 1) in the master brake circuit (I) and which lead: to the 3/2-road valve (7), said 2/2-road solenoid valve (7.4) being switched to allow throughput when in its idle position and allowing brake-medium pressure in the master brake circuit (I) to reach the pilot circuitry of the 3/2-road valve (7) unobstructed, characterized in that the 2/2-road solenoid valve (7. 4) cuts off the pilot circuit (7. 2, 7. 2. 1) when the latter is directed into its working position, that the electrical control circuit (7.4.3) is connected with a logic component (4. 1), which has two inputs (E I, E II; E I, E III) to it, both on an AND link (4. 1. 1 h, 4. 1. 1 v), for each brake circuit and an output (Ah; Av) of an end stage (4. 1. 2) which is connected to the AND link and which can control said end stage, and that the 2/2-road solenoid valve (7.4) is controlled by means of the output and the electrical control circuit (7.4.3) if a signal (S II; S III) is present at an input (E II ; E III) to the logic component (4.1), said signal marking a fall below a definite pressure threshold (11.2) of the brake-medium pressure, at the wheel brake cylinder (3), which is monitored by means of the pressure sensor (11), and the general existence of a required value provided from the setting means (8), and a signal (S I) is present at another input (EI) to the logic component (4. 1) which at least denotes the absence of a fault status signal (FS) in the adjustment device (4) which electrically/electronically monitors the whole brake device.

2. Electronically controlled pressure-medium brake device according to claim 1, characterized in that the required value passed forward by the setting means (8) is in addition supplied to a threshold value element (8.2), which in the case of passing forward of a required value which is below a set threshold value briefly controls the solenoid-opearated pilot valve unit (ÜE 5,6) by means of the electronic adjustment device (4), such that the 3/2-road valve switches into its working position.

3. Electronically controlled pressure-medium brake device according to claim 1, characterized in that the signal (SI) additionally denotes the presence of ah anti-skid adjustment signal (ABS).

4. Electronically controlled pressure-medium brake device according to claim 1, characterized in that the definite pressure threshold for the switching of the 2/2-road solenoid valve (7.4) is greater than the pilot pressure required to switch the 3/2-road valve (7).

## Revendications

1. Installation de freinage par fluide sous pression à régulation électronique pour au moins un circuit de freinage d'un véhicule, comportant au moins une soupape de frein de service (9) et un générateur électrique de valeur de consigne (8) qui peuvent être actionnés ensemble par l'intermédiaire d'une pédale de frein (10), ainsi que, pour chaque roue à freiner dans ce circuit de freinage, un cylindre de frein de roue (3), ce (ou ces) cylindre(s) de frein(s) de roue(s) pouvant être relié(s) à une source de fluide sous pression (1), au moyen d'un ensemble de soupapes électromagnétiques (UE 5,6) pouvant être commandé par un dispositif de régulation électronique (4), par l'intermédiaire d'un circuit de freinage principal (I) directement, ou bien par l'intermédiaire d'un circuit de freinage secondaire (II) et de la soupape de frein de service (9), l'entrée du cylindre de frein de roue (3) étant associée d'une part à une soupape à 3/2 voies pouvant être pilotée par l'intermédiaire d'un conduit de commande pilote (7.2,7.2.1) par la pression du fluide de frein dans le circuit de freinage principal (I), en établissant, dans sa position de repos, la liaison avec le circuit de freinage secondaire (II) et, dans sa position de travail pilotée par la pression du fluide de frein, la liaison avec le circuit de freinage principal (I), et d'autre part un capteur de pression (11) contrôlant la variation de la pression, et il est en outre prévu, dans le conduit de commande de pilote partant d'un conduit de pression (5.1) du circuit de freinage principal (I) et aboutissant à la soupape à 3/2 voies (7), une soupape électromagnétique à 2/2 voies (7.4), pouvant être actionnée par l'intermédiaire d'un conducteur électrique de commande (7.4.3), en étant ouverte dans sa position de repos et en permettant à la pression du fluide de frein existant dans le circuit de freinage principal (I) de parvenir sans entrave à la soupape à 3/2 voies (7) pour assurer sa commande pilote,
- installation caractérisée,
. en ce que la soupape électromagnétique à 2/2 voies (7.4) produit, dans sa position de travail commandée, une fermeture du conduit de commande pilote (7.2,7.2.1),
. en ce que le conducteur électrique de commande (7.4.3) est relié à un composant logique (4.1),
qui comporte pour chaque circuit de freinage deux entrées (E I, E II ; E I, E III) aboutissant chacune à une porte-ET (4.1.1 h, 4.1.1 v),
ainsi qu'une sortie (Ah; Av) d'un étage final (4.1.2) relié à la porte-ET et pouvant être commandé par celle-ci,
. en ce que la soupape électromagnétique à 2/2 voies (7.4) est ensuite commandée par l'intermédiaire de la sortie et du conducteur électrique de commande (7.4.3),
- lors de l'application à une entrée (E II ; E III) du composant logique (4.1) d'un signal (S II ; S III)
. qui caractérise une diminution, en dessous d'un seuil défini de pression (11.2), de la pression de fluide de frein, contrôlée par le capteur de pression (11), dans le cylindre de frein de roue (3), et la manifestation générale d'une prédétermination de valeur de consigne par le générateur de valeurs de consigne (8),
- et lors de l'application à une autre entrée (E I) du composant logique (4.1) d'un signal (S I)
. qui caractérise au moins l'absence d'un signal d'état d'erreur (FS) de la part du dispositif de régulation (4) assurant le contrôle électrique/électronique de l'installation générale de freinage.

2. Installation de freinage par fluide sous pression à régulation électronique selon la revendication 1, caractérisée en ce que la valeur de consigne prédéterminée par le générateur de valeurs de consigne (8) est en outre appliquée à un organe de définition de seuil (8.2) qui, lorsqu'une valeur de seuil prédéterminée est inférieure à un seuil préréglé, actionne, par l'intermédiaire du dispositif de régulation électronique (4) et pendant une courte durée, l'ensemble de soupapes électromagnétiques (UE 5,6) de telle sorte que la soupape à 3/2 voies (7) soit commutée dans sa position de travail.

3. Installation de freinage par fluide sous pression à régulation électronique selon la revendication 1, caractérisée en ce que le signal (S I) caractérise additionnellement l'existence d'un signal de régulation anti-blocage (ABS).

4. Installation de freinage par fluide sous pression à régulation électronique selon la revendication 1, caractérisée en ce que le seuil défini de pression pour la commutation de la soupape électromagnétique à 2/2 voies (7.4) est plus grand que la pression de commande pilote nécessaire pour la commutation de la soupape à 3/2 voies (7).
